# EUROPÄISCHE PATENTSCHRIFT

(11) **EP 1 483 528 B1**
(45) Veröffentlichungstag und Bekanntmachung des Hinweises auf die Patenterteilung: **31.05.2006**
(21) Anmeldenummer: 03711927.8
(22) Anmeldetag: 05.03.2003
(51) Int. Cl.: F16M 11/00, E06C 7/44, A47B 91/16, E04H 17/20, B62B 1/18

(54) **VORRICHTUNG ZUM HOEHEN- UND NEIGUNGSAUSGLEICH**
DEVICE FOR HEIGHT AND GRADIENT COMPENSATION
DISPOSITIF DE COMPENSATION DE HAUTEUR ET DE PENTE

(30) Priorität: 07.03.2002 AT 355002; 17.05.2002 AT 7602002
(43) Veröffentlichungstag der Anmeldung: 08.12.2004
(73) Patentinhaber: Hosp, Roland, 6621 Bichlbach (AT)
(72) Erfinder: Hosp, Roland, 6621 Bichlbach (AT)
(74) Vertreter: Klunker . Schmitt-Nilson . Hirsch
(86) Internationale Anmeldenummer: PCT/EP2003/002247
(87) Internationale Veröffentlichungsnummer: WO 2003/074928

(56) Entgegenhaltungen:
- EP-A- 0 006 230
- EP-A- 1 038 465
- BE-A- 519 672
- DE-A- 2 743 173
- DE-U- 8 912 191
- FR-A- 1 254 121
- GB-A- 655 493
- GB-A- 2 239 889
- US-A- 2 971 602
- PATENT ABSTRACTS OF JAPAN vol. 1999, no. 08, 30. Juni 1999 (1999-06-30) -& JP 11 081843 A (TATEYAMA ALUM IND CO LTD), 26. März 1999 (1999-03-26) in der Anmeldung erwähnt
- PATENT ABSTRACTS OF JAPAN vol. 1997, no. 06, 30. Juni 1997 (1997-06-30) -& JP 09 049382 A (FUJIMOTO YUKIHIRO;YANO TOSHIHITO), 18. Februar 1997 (1997-02-18) in der Anmeldung erwähnt

## Beschreibung

Die vorliegende Erfindung betrifft eine Vorrichtung zum Höhen- und Neigungsausgleich, die vorliegende Erfindung betrifft ferner eine derartige Vorrichtung, aufweisend einen bogenförmigen Bügel, der verschiebbar in einer Führung angeordnet ist, wobei der Bügel mindestens an einem Ende aus der Führung heraussteht und dieses mindestens eine Bügelende ein Standbein für die Vorrichtung bildet, und wobei mindestens ein weiteres Abstützelement vorgesehen ist.

Derartige Vorrichtungen sind aus JP 11-081843 und JP 09-049382 bekannt. Diese Vorrichtungen sind, was den Neigungsausgleichmechanismus anlangt, kompliziert aufgebaut und kompliziert zu handhaben. Sie benötigen eine Feststelleinrichtung, um den Neigungsausgleichmechanismus in der gewünschten Position festzuklemmen. Insbesondere der Neigungsausgleichmechanismus von JP 09-049382 besitzt einen komplizierten Aufbau. Die Führungen für den bogenförmigen Bügel sind mittels eines Scharniers und einer daran angeschlossenen Feder derart beweglich aufgebaut, dass sie in der gewünschten Position eine gewisse Klemmkraft aufbringen können. Offensichtlich hält allein die Federkraft die Klemmkraft auf den Bügel aufrecht, so dass entweder die Klemmkraft nicht ausreichend ist, um einen sicheren Stand zu gewährleisten oder dass die Klemmkraft der Feder so stark ist, dass eine Verstellung des Bügels nur mit großem Kraftaufwand möglich ist und entsprechend die Einsatzmöglichkeiten dieser Konstruktion beeinträchtigt ist. So ist auch bei dieser Konstruktion eine Feststellvorrichtung vorhanden.

Die Notwendigkeit, auf schnelle und unaufwändige Weise einen Höhen- bzw. Neigungsausgleich vornehmen zu können, tritt häufig bei Arbeiten im Gelände auf. Beispielsweise kann es bei Straßenbauarbeiten erforderlich sein, provisorische Verkehrszeichen gut sichtbar in einer Hanglage aufzustellen.

Diverse weitere Vorrichtungen zur horizontalen Ausrichtung einer Auflagefläche über einer unebenen Oberfläche sind bereits bekannt. Die GB 2 361 942 A beschreibt beispielsweise ein Verfahren zur Errichtung einer horizontalen Ebene in einem unebenen Gelände, bei dem eine Auflagefläche auf einem Gerüst aus höhenverstellbaren Teleskopstützen aufliegt. Die US 4 884 791 offenbart ebenfalls eine Vorrichtung zum Höhenausgleich mit vertikal verstellbaren Stützen, die durch Feststellungsvonichtungen gesichert werden können. Problematisch ist in diesem Zusammenhang der zeit- und arbeitsaufwändige Aufbau der Vorrichtungen, die zudem in der gewünschten Ausrichtung fixiert werden müssen.

In Anbetracht des vorangehend geschilderten Stands der Technik und insbesondere der beiden japanischen Schriften ist es die Aufgabe der vorliegenden Erfindung, eine Vorrichtung der beschriebenen Art bereitzustellen, die einfach hergestellt werden kann, einfach zu bedienen ist, und die einen sicheren Stand gewährleistet.

Erfindungsgemäß wird diese Aufgabe mit den Merkmalen des Anspruchs 1.

Die Anordnung des Bügels mit einem Winkel relativ zur Lotrechten, d.h. relativ zur Schwerkraftrichtung, erlaubt es, selbsthemmende Eigenschaften dieser Konstruktion zur Feststellung des Bügels im Einsatz auszunutzen. Andererseits kann der Bügel problemlos in der Führung verlagert werden, sobald die Vorrichtung entlastet ist. Damit ist es in der Praxis sehr leicht und einfach möglich, diese Vorrichtung einzusetzen. Es wird zuerst im entlasteten Zustand die Vorrichtung in die richtige Position verbracht. Bei der anschließenden Belastung treten die Selbsthemmungskräfte in Einsatz und stellen sicher und zuverlässig die Position der Vorrichtung sicher.

Es sei darauf hingewiesen, dass bei dieser Konstruktion zwei unterschiedliche Prinzipien die Selbsthemmung bewirken. Das eine Prinzip ergibt sich aus der

Selbsthemmung des Bügels in seiner Führung. Durch die Anordnung mit einem Winkel des Bügels zu der Führung wird bei Belastung ein Drehmoment erzeugt, welches den Bügel gegen die Führung presst und damit eine reibschlüssige Festlegung bewirkt. Das zweite Prinzip beruht auf der Tatsache, dass bei der Anordnung des Bügels mit einem Winkel relativ zur Lotrechten eine Verstellung der Vorrichtung nur möglich ist, wenn sich die Aufstandspunkte der Vorrichtung relativ zueinander verlagern. Dies sei nachfolgend an Hand eines Beispiels geschildert: Für dieses Beispiel betrachten wir eine Vorrichtung, bei der die beiden Bügelenden und eine Strebe drei Standbeine eines Dreibeins bilden und mit einer Platte bzw. einer Auflagefläche verbunden sind. Das Podest sei so ausgelegt, dass, wenn man es auf einem planen Untergrund aufstellt, die Aufstandspunkte der Bügelenden und der Strebe auf der Oberfläche ein gleichseitiges Dreieck bilden. Wäre der Bügel nicht mit einem Winkel zur Lotrechten angeordnet, so könnte man die Platte des Podests relativ problemlos seitlich verkippen; die Führung könne ohne weiteres relativ zu dem feststehenden Bügel verschoben werden. Eine derartige Vorrichtung wäre nicht stabil, sie würde ohne eine Feststellvorrichtung nicht funktionieren. Ist jedoch der Bügel mit einem Winkel, beispielsweise etwa 45° relativ zur Lotrechten angeordnet, so ist ein seitliches Verkippen der Plattform nicht möglich, ohne die Lage der Aufstandspunkte auf der Oberfläche zu verändern. Oder anders ausgedrückt, bilden, wenn bei dieser Konstruktion die Platte des Podests mit einem Winkel relativ zur horizontalen Oberfläche angeordnet ist, die Aufstandspunkte ein windschiefes Dreieck aus. Die Reibung zwischen den Standbeinen und der Oberfläche, auf der die Vorrichtung steht, verhindert ein Verkippen der Oberfläche. Dieser Effekt ist umso ausgeprägter, je größer die Belastung auf die Vorrichtung ist. Dieses Prinzip funktioniert auch, wenn das weitere Abstützelement ein Rad, beispielsweise das Rad eines Schubkarren, ist. Dieses Prinzip funktioniert auch, wenn das weitere Abstützelement ebenfalls ein in einer Führung geführter Bügel ist. Es kann günstig sein, Reibung erhöhende Elemente, z.B. Gummifüße, Erdnägel, etc., an den Standbeinen der Vorrichtung vorzusehen.

Somit erkennt man, dass die erfindungsgemäße Vorrichtung den schnellen und sicheren Höhen- und Neigungsausgleich auf einer nicht-horizontalen Oberfläche gewährleisten kann.

Vorzugsweise stehen beide Enden des Bügels aus der Führung heraus und bilden zwei Standbeine für die Vorrichtung.

Vorzugsweise beträgt der Winkel der Lotrechten zwischen 30 und 60° und besonders bevorzugt etwa 45°. Wesentlich geringere Winkel als 30° sind nicht ausreichend, um die Vorrichtung allein mit dem Einfluss der Schwerkraft sicher festzustellen. Insbesondere bei relativ geringen Winkeln zwischen Bügel und Lotrechter sind die Hebelverhältnisse so ungünstig, dass eine sichere Feststellung nicht möglich ist.

Technisch und wirtschaftlich vorteilhaft an dieser Erfindung ist ihre einfache Konstruktionsweise, die eine geringe Reparaturanfälligkeit bei niedrigen Herstellungskosten sicherstellt.

Der Höhen- und Neigungsausgleich erfolgt auf einfache Weise dadurch, dass ein aus dem Führungsrohr herausschauendes Bügelende talseitig und das andere hangseitig positioniert und dann durch Verstellen de Führungsrohrs eine daran befestigte Auflagefläche horizontal ausgerichtet wird. Da der Außendurchmesser des Bügels im Wesentlichen dem Innendurchmesser des Führungsrohrs entspricht, verkantet sich der Bügel im Führungsrohr unter dem Eigengewicht der Vorrichtung, wodurch diese kraftschlüssig festgestellt ist. Dadurch entfällt die Notwendigkeit einer zusätzlichen Fixierung der Vorrichtung.

Bei einer vorteilhaften Ausführungsform der Erfindung ist eine zusätzliche Sicherungsvorrichtung gegen dynamische Belastungen, wie z.B. Vibrationen, vorgesehen.

Noch vorteilhafter ist eine Ausführungsform der Erfindung, bei der die Ebene, in der das Führungsrohr verläuft, mit dem Lot auf die Aufstandfläche einen Winkel von etwa 45° einschließt. Dies ist vorteilhaft für die Stabilität der Vorrichtung und resultiert gleichzeitig in einer hohen statischen Belastbarkeit.

Bei einer weiteren vorteilhaften Ausführungsform der Erfindung ist vorgesehen, dass an den aus dem Führungsrohr herausstehenden Bereichen des Bügels jeweils eine Schraubenfeder angeordnet ist. Dies hat den Vorteil, dass der Bügel beim Anheben der Vorrichtung automatisch in Mittelstellung bezüglich des Führungsrohrs gebracht wird und somit die Vorrichtung nicht unnötig hoch angehoben werden muss.

Eine weitere Ausführungsform der Erfindung sieht vor, dass mindestens zwei bogenförmige Bügel verschiebbar in jeweils einem Führungsrohr angeordnet sind, wobei die Bügel aus den jeweiligen Führungsrohren herausstehen und die jeweiligen Führungsrohre an einer gemeinsamen Auflagefläche befestigt sind. Dies vergrößert die zur Verfügung stehende Auflagefläche, die beispielsweise von der Oberseite einer Platte gebildet werden kann. Eine besonders große Stabilität ergibt sich bei dieser Ausführungsform, wenn die Ebenen der beiden Führungsrohre miteinander einen Winkel von etwa 90° einschließen.

Eine besonders vorteilhafte Ausführungsform der Erfindung ergibt sich dadurch, dass die Vorrichtung mit einem bewegbaren Gegenstand vorzugsweise starr in Verbindung steht. Dadurch können Gegenstände des täglichen Gebrauchs auf einfache und kostengünstige Weise für den Einsatz im unebenen Gelände modifiziert werden.

Besonders vorteilhaft ist es beispielsweise, eine erfindungsgemäße Vorrichtung an einem Schubkarren zu befestigen. Dadurch kann ein Umkippen der beladenen Schubkarre im unebenen Gelände, beispielsweise einem Hang oder einer Baustelle, vermieden werden.

Des weiteren bietet es sich an, eine erfindungsgemäße Vorrichtung an einem Tischwagen zu befestigen, vor allem, wenn dieser als Maschinenauflagetisch ausgeführt ist. Herkömmliche Wippsägen sind beispielsweise meist mit zwei Rädern auf einer starren Achse und zwei Stützfüßen versehen. Im unebenen Gelände müssen hier herkömmliche Wippsägen durch Auflagen abgestützt werden, um eine Schiefstellung oder gar ein Umkippen zu verhindern. Ersetzt man die Stützfüße durch die erfindungsgemäße Vorrichtung, wird dieser Kippeffekt von vornherein unterbunden. Durch das Anbringen von Schraubenfedern an den aus dem Führungsrohr herausstehenden Bereichen des Bügels muss die Säge beim einseitigen Anheben zum Schieben auf ihren Rädern nicht unnötig hoch angehoben werden, da der Bügel automatisch in Mittelstellung gelangt.

Eine besonders vorteilhafte Ausführungsform ergibt sich, wenn der Außendurchmesser des Bügels im Wesentlichen dem Innendurchmesser des Führungsrohrs entspricht. Dadurch verkantet sich der Bügel im Führungsrohr und wird kraftschlüssig festgestellt.

Eine besonders günstige kraftschlüssige Feststellung des Bügels im Führungsrohr ergibt sich, wenn die Ebene, in der das Führungsrohr verläuft, beim abgestellten bewegbaren Gegenstand mit dem Lot einen Winkel vorzugsweise von etwa 45° bildet.

Zur besseren Feststellung unter dynamischen Belastungen kann eine zusätzliche Feststellungsvorrichtung, beispielsweise durch einen Splint oder Schrauben, der in der Mitte des Führungsrohrs durch den Bügel gesteckt wird, vorgesehen sein.

Eine weitere vorteilhaft Ausführungsform der Erfindung ergibt sich dadurch, dass der bewegbare Gegenstand eine Leiter ist. Häufig ergibt sich beispielsweise bei Arbeiten an einer Hausfassade die Notwendigkeit, diese auf einer Leiter stehend durchführen zu müssen. Befindet sich der Wandabschnitt etwa im Bereich einer Stiege, ist es aus Sicherheitsgründen nicht möglich, den Höhenunterschied beim Aufstellen der Leiter durch das Unterlegen von Einlagen auszugleichen. Durch das Verwenden einer Leiter, die mit der erfindungsgemäßen Vorrichtung ausgestattet ist, können die Arbeiten gefahrlos vorgenommen werden. Dabei ist es vorteilhaft, wenn die Ebene, in der das Führungsrohr verläuft, mit der Ebene, in der die Leiter verläuft, einen Winkel, vorzugsweise zwischen 0° und 90°, insbesondere von etwa 25°, bildet. Da Leitern üblicherweise in einem Winkel von etwa 70° an eine Hausmauer angelehnt werden, ergibt sich zwischen Führungsrohr und Lot ein vorteilhafter Winkel von etwa 45°, wenn die Vorrichtung in einem Winkel von 25° an der Leiter befestigt ist.

Falls die kraftschlüssige Feststellung durch das Verkanten des Bügels im Führungsrohr aus Sicherheitsgründen nicht ausreichend erscheint, kann natürlich eine zusätzliche Feststellungsvorrichtung vorgesehen sein.

Bei allen Ausführungsbeispielen wäre es natürlich möglich, eine derartige Ausführung zu wählen, dass der Bügel unter dem Einfluss der Schwerkraft formschlüssig im Führungsrohr festgestellt ist. Dazu muss der Innendurchmesser des Führungsrohrs selbstverständlich so viel größer als der Außendurchmesser des Bügels sein, dass die formschlüssige Feststellung durch das Anheben des Führungsrohrs aufgehoben und der Bügel verstellt werden kann.

Zur Senkung des Gesamtgewichts der erfindungsgemäßen Vorrichtung kann es auch vorgesehen sein, das Führungsrohr durch Rohrabschnitte oder Ringe zu ersetzen.

Eine weitere vorteilhafte Ausführungsform der Erfindung ergibt sich dadurch, dass die Vorrichtung aus witterungsbeständigem Material gefertigt ist. Dies garantiert eine hohe Lebensdauer der Vorrichtung beim Einsatz im Freien.

Eine weitere vorteilhafte Ausführungsform der Erfindung ergibt sich dadurch, dass an der kreisrund- oder rechteckig ausgebildeten Auflagefläche Befestigungsvorrichtungen zum lösbaren Befestigen der auf die Auflagefläche aufgelegten Gegenstände angebracht sind.

Die Erfindung betrifft ferner eine Leiter, ein Straßenverkehrszeichen, eine Schubkarre, ein Motorrad, einen Tisch und einen Zaun, jeweils aufweisend eine erfindungsgemäße Vorrichtung.

Besonders eignet sich die erfindungsgemäße Vorrichtung für Zäune. Es ist in der Landwirtschaft und insbesondere bei der Pferdehaltung häufig erforderlich, schnell und flexibel Zäune aufstellen zu können, die ein vorgegebenes Areal sicher umschließen. Es gibt flexible Systeme, die einigermaßen zuverlässig auf horizontalem Untergrund funktionieren. Problematisch wird das Aufstellen derartiger Zäune dann, wenn der Untergrund uneben oder geneigt ist. Erfindungsgemäß weist ein Zaun vertikale Zaunständer und daran angeschlossene horizontale Zaunelemente auf, wobei ein Zaunständer mit einer erfindungsgemäßen Vorrichtung zum Aufstellen auf den Untergrund versehen ist. Vorzugsweise ist die erfinderische Vorrichtung als Dreibein, d.h. ein Bogen mit einer zusätzlichen Strebe, ausgebildet. Es ist besonders bevorzugt, die Zaunelemente aus einem besonders leichten und korrosionsbeständigen Material herzustellen. So eignet sich beispielsweise Aluminium. Die Führung und/oder der Bogen kann mit einem Kunststoffmaterial überzogen sein, um ein besseres Gleiten des Bügels in der Führung sicherzustellen. Das gilt auch ganz generell für die erfinderische Vorrichtung und andere Anwendungsmöglichkeiten. Alternativ können bei Führung und Bügel Materialpaarungen gewählt sein, die besonders günstige Gleiteigenschaften aufweisen.

Die Erfindung und Ausgestaltungen der Erfindung werden nachfolgend an Hand von Figuren beschrieben. Es zeigen:
Figuren 1 und 1 a ein Ausführungsbeispiel einer erfindungsgemäßen Vorrichtung in perspektivischer Ansicht und Seitenansicht;
Fig. 2 diese Vorrichtung bei erfindungsgemäßer Verwendung;
Fig. 3 ein weiteres erfindungsgemäßes Anwendungsbeispiel;
Fig. 4 eine erfindungsgemäße Vorrichtung in Draufsicht;
Fig. 5 ein Ausführungsbeispiel einer erfindungsgemäßen Vorrichtung unter Verwendung zweier Bügel;
Fig. 6 eine Seitenansicht dieser Vorrichtung;
Fig. 7 eine Draufsicht dieser Vorrichtung;
Fig. 8 ein weiteres Ausführungsbeispiel einer erfindungsgemäßen Vorrichtung in perspektivischer Ansicht;
Fig. 9 eine Seitenansicht dieser Vorrichtung;
Fig. 10 eine Vorderansicht dieser Vorrichtung;
Fig. 11 ein weiteres Ausführungsbeispiel dieser Vorrichtung in perspektivischer Ansicht;
Fig. 12 eine Vorderansicht dieses Ausführungsbeispiels;
Fig. 13 eine Seitenansicht dieses Ausführungsbeispiels;
Fig. 14 ein weiteres Ausführungsbeispiel einer erfindungsgemäßen Vorrichtung in perspektivischer Ansicht;
Fig. 15 eine Vorderansicht dieser Vorrichtung;
Fig. 16 eine Seitenansicht dieser Vorrichtung;
Fig. 17 ein weiteres Ausführungsbeispiel einer erfindungsgemäßen Vorrichtung in Seitenansicht;
Fig. 18 eine perspektivische Ansicht dieser Vorrichtung;
Fig. 19 eine Vorderansicht dieser Vorrichtung;
Fig. 20 einen Zaun aufweisend eine erfindungsgemäße Vorrichtung; und
Fig. 21 eine Detailansicht zu Fig. 20.

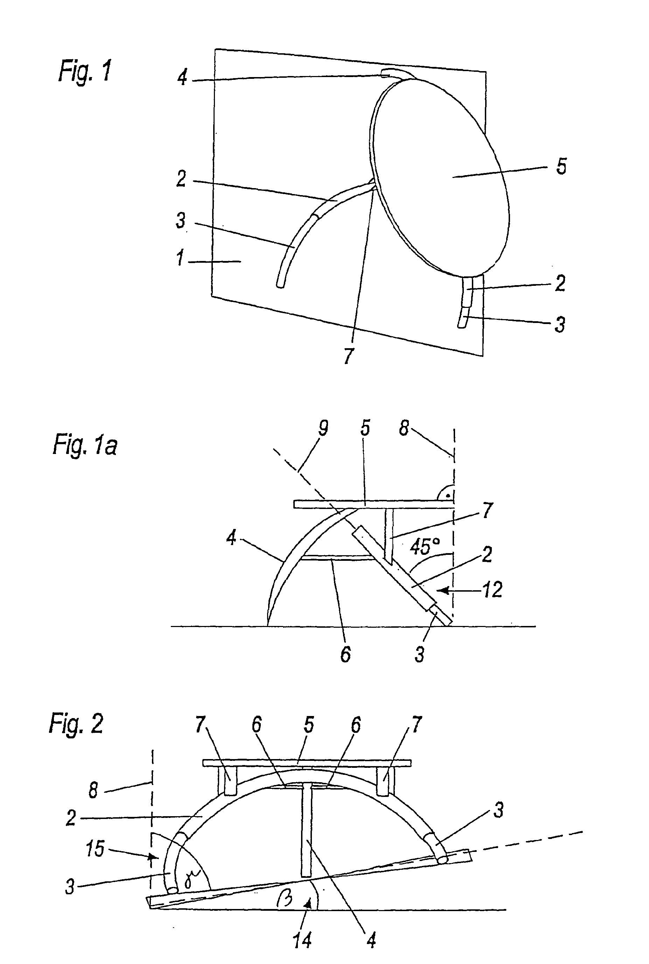

Fig. 1 zeigt eine erfindungsgemäße Vorrichtung 1 mit einem spielfrei in einem Führungsrohr 2 geführten Bügel 3, wobei der Bügel 3 aus dem Führungsrohr 2 heraussteht und eine gebogene Strebe 4 mit dem Führungsrohr 2 in Verbindung steht. Daran befestigt ist eine kreisförmige Platte, die mit ihrer Oberseite eine Auflagefläche 5 bildet. In Fig. 1a ist zu sehen, dass die Platte über eine vertikale Strebe 7 am Führungsrohr 2 befestigt ist. Die gebogene Strebe 4 ist über eine Halterungsstrebe 6 mit dem Führungsrohr 2 verbunden. Des weiteren erkennt man, dass die Ebene 9, in der das Führungsrohr 2 verläuft, mit dem Lot 8 auf die Auflagefläche 5 einen Winkel 12 von 45° einschließt.

Fig. 2 zeigt die erfindungsgemäße Verwendung der Vorrichtung 1 zum Neigungsausgleich auf einer schiefen Ebene, die mit der Horizontalen einen Winkel β 14 und mit dem Lot 8 einen Winkel y 15 einschließt. Zu erkennen ist, dass das talseitige Bügelende 3 weiter aus dem Führungsrohr herausschaut als das hangseitige Bügelende 3, wodurch sich eine horizontale Ausrichtung der Auflagefläche 5 ergibt.

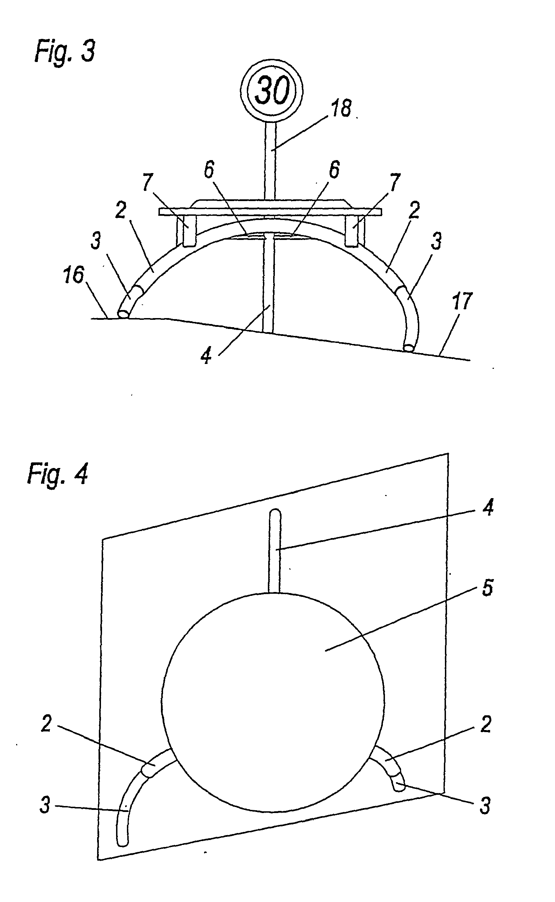

Fig. 3 zeigt ein weiteres Anwendungsbeispiel einer erfindungsgemäßen Vorrichtung. Hierbei wurde ein Bügelende 3 auf einem Straßenrand 16 und das andere Bügelende in einem von der Straße abfallenden Hang 17 positioniert. Auf der horizontal ausgerichteten Auflagefläche 5 wurde ein Straßenverkehrszeichen 18 aufgestellt.

Fig. 4 ist die zu Fig. 2 gehörende Draufsicht auf eine erfindungsgemäße Vorrichtung.

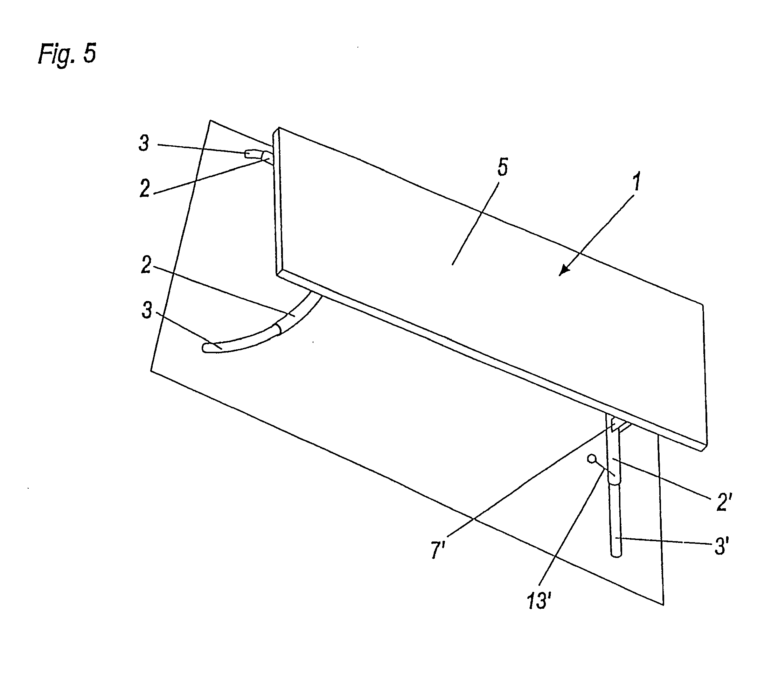

Fig. 5 zeigt in perspektivischer Ansicht ein weiteres Ausführungsbeispiel einer erfindungsgemäßen Vorrichtung 1 unter Verwendung zweier Führungsrohre 2, 2', in denen jeweils ein bogenförmiger Bügel 3, 3' spielfrei verschiebbar angeordnet ist. Die Führungsrohre 2, 2' sind über Befestigungsstreben 7, 7' an einer rechteckigen Platte, deren Oberseite die Auflagefläche 5 bildet, befestigt.

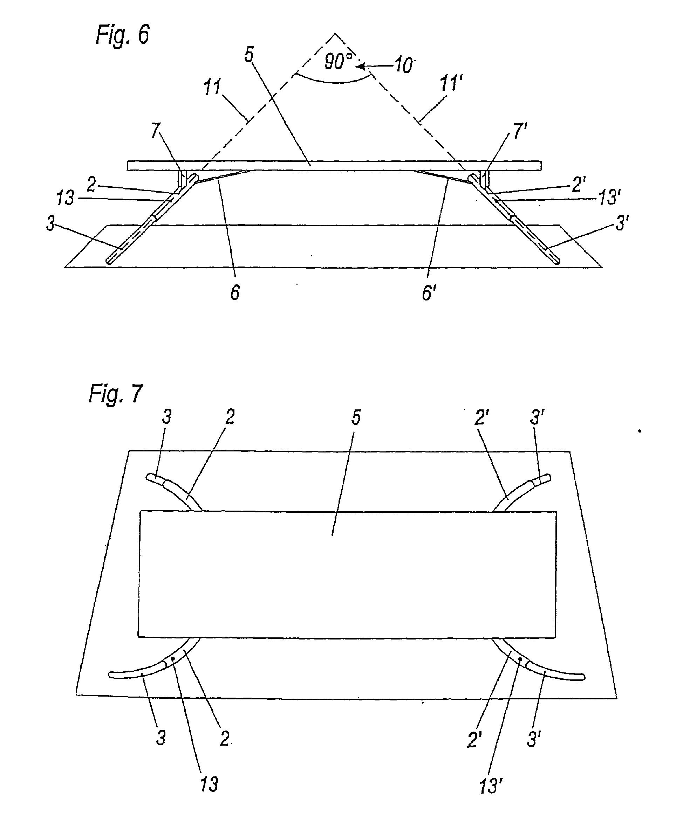

Fig. 6 zeigt die dazu gehörige Seitenansicht, in der zu erkennen ist, dass die Ebenen 11, 11' der beiden Führungsrohre 2, 2' miteinander einen Winkel 10 von 90° einschließen. Des weiteren erkennt man, dass die Führungsrohre 2, 2' über zusätzliche Halterungsstreben 6, 6' mit der Platte verbunden sind.

Fig. 7 zeigt die Draufsicht auf die in den Figuren 5 und 6 dargestellte Vorrichtung.

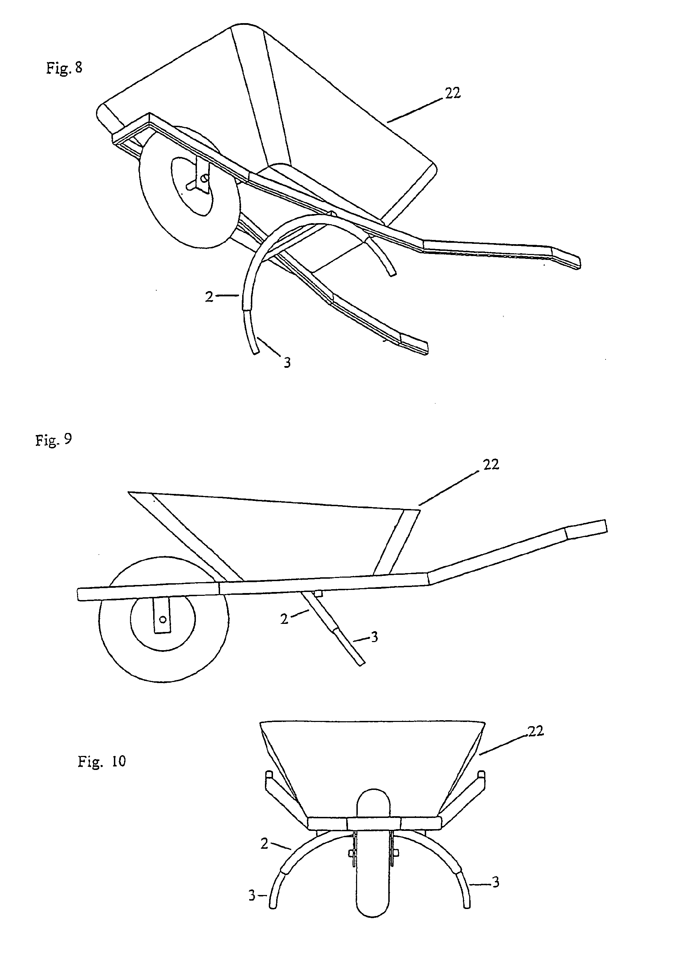

Fig. 8 zeigt einen Schubkarren 22 in perspektivischer Ansicht, an dem eine erfindungsgemäße Vorrichtung befestigt ist. Fig. 9 und 10 sind die dazu gehörigen Seiten- und Vorderansichten.

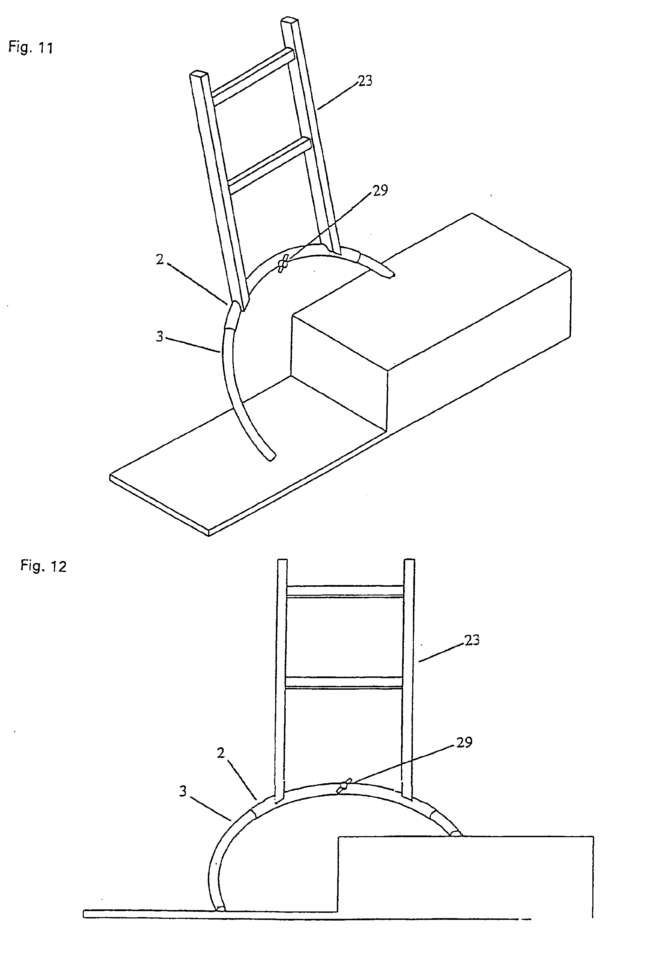

In Fig. 11 ist eine Leiter 23, an die das Führungsrohr 2 einer erfindungsgemäßen Vorrichtung befestigt wurde, zu erkennen.

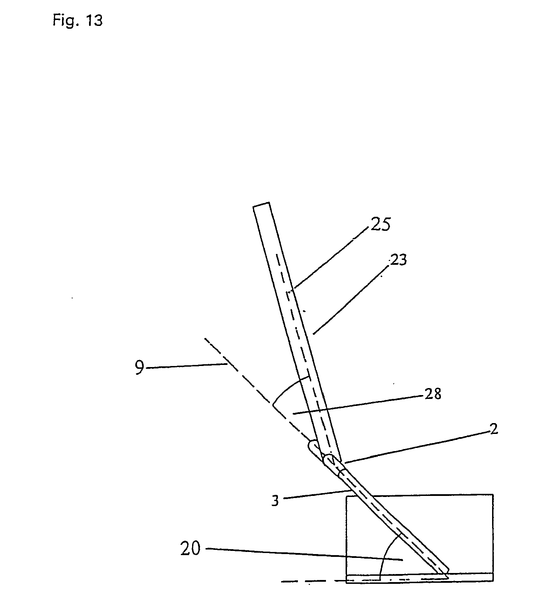

Fig. 12 zeigt die dazu gehörige Vorderansicht. In Fig. 13 erkennt man, dass die Ebene 9, in der das Führungsrohr verläuft, mit der Ebene 25, in der die Leiter 23 verläuft, einen Winkel 28 bildet. Dadurch wird erreicht, dass die Ebene 9 mit der Bodenfläche einen Winkel 20 von etwa 45° bildet. Zusätzlich kann eine Klemmschraube 29 zur Feststellung vorgesehen sein.

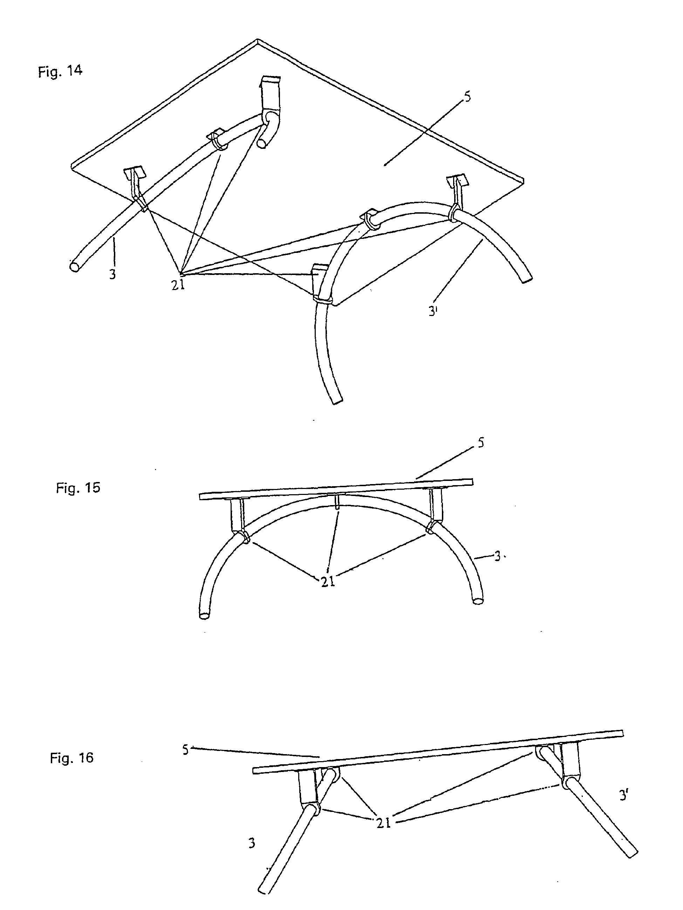

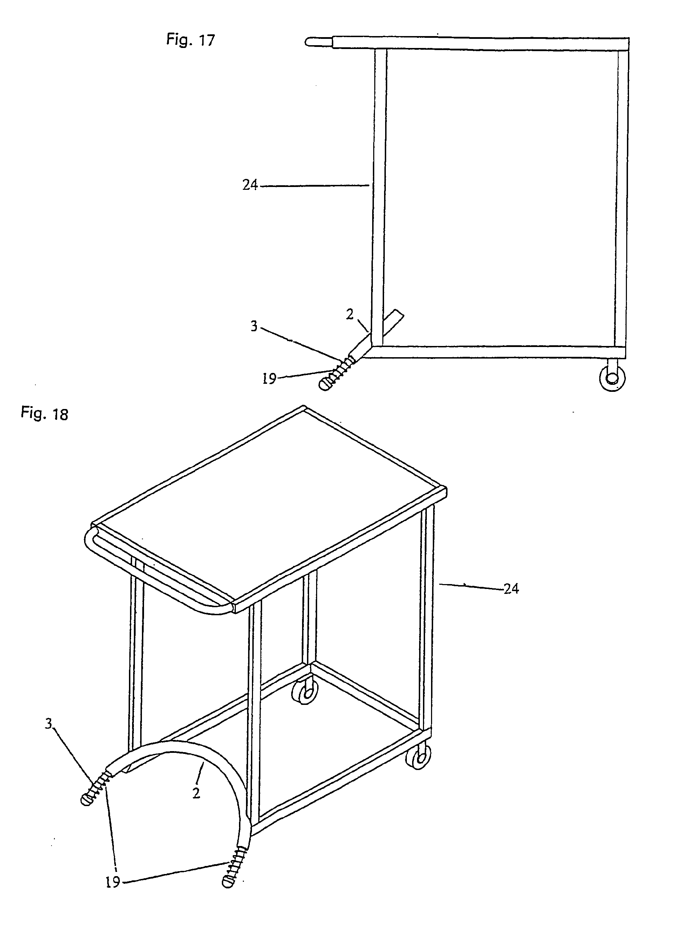

In den Figuren 14 bis 16 erkennt man ein Ausführungsbeispiel, bei dem die Führungsrohre 2, 2' durch Ringe 21 ersetzt wurden.

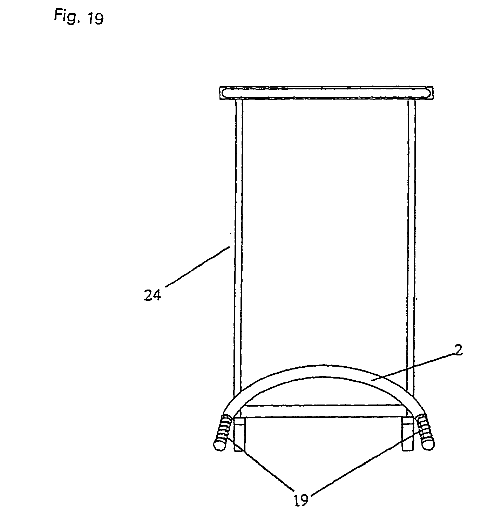

Die Figuren 17 bis 19 zeigen einen Tischwagen 24, an den eine erfindungsgemäße Vorrichtung an Stelle der Stützfüße befestigt wurde. Zu erkennen sind des weiteren die Schraubenfedern 19, die an den aus dem Führungsrohr herausstehenden Enden des Bügels 3 angeordnet wurden. Die Schraubenfedern 19 bilden eine Rückstell- bzw. Zentriervorrichtung, mittels derer der Bügel im unbelasteten Zustand in seine Ausgangsposition zurück gestellt wird. Bei der gezeigten Ausführungsform sind zwei Schraubenfedern zwischen den Bügelenden und der Führung vorgesehen. Eine derartige Rückstellvorrichtung kann grundsätzlich bei allen verschiedenen Ausführungsbeispielen der vorliegenden Erfindung realisiert sein. Die Rückstellvorrichtung kann an Stelle der Schraubenfeder 19 auch andere Rückstellelemente, beispielsweise aus Gummimaterial oder pneumatisch aufweisen. Die Rückstellelemente können auch in der Führung integriert sein, so dass sie nicht zu exponiert sind, wie in den Figuren 17 bis 19 gezeigt. Die Führungselemente können auch bei einer dicht durchgehenden Führung, d.h. beispielsweise bei Führungsringen oder Führungs-Rohrabschnitten, im Bereich der Mitte des bogenförmigen Bügels vorgesehen sein. Sie sind dort bei den allermeisten Anwendungen deutlich geschützter angeordnet als an den Rohrenden. An dem Bügel können entsprechende Anschläge für Federn vorgesehen sein.

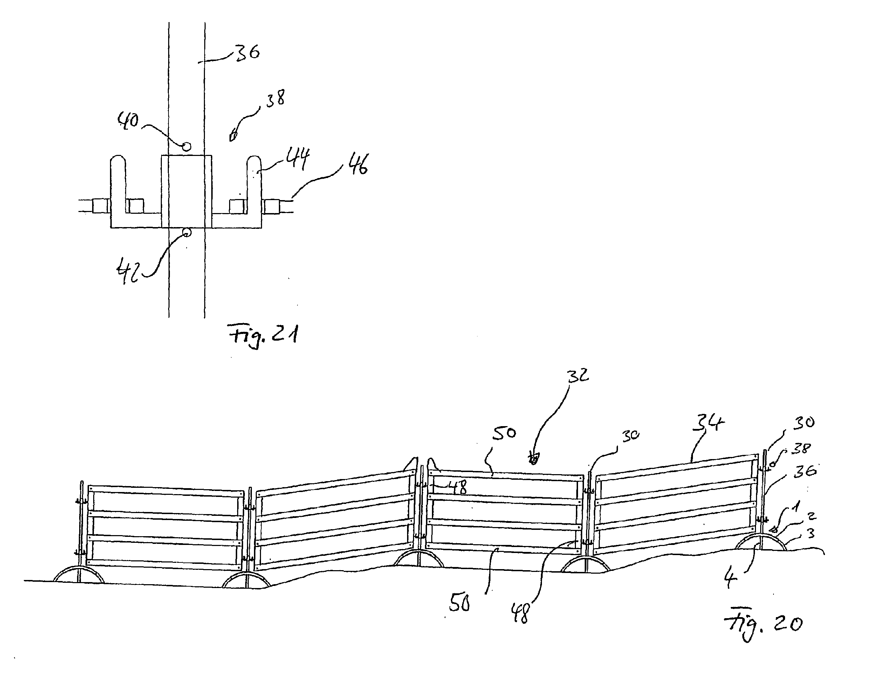

Die Figuren 20 und 21 zeigen einen Zaun 32 aufweisend eine Vorrichtung 1 gemäß der vorliegenden Erfindung. Insbesondere erkennt man vertikale Zaunständer 30, die an ihrem unteren Ende eine Vorrichtung 1 gemäß der vorliegenden Erfindung aufweisen. Die Vorrichtung 1 ist im Wesentlichen in der Art eine Dreibeins ausgebildet. Sie kann jedoch ebenso mit zwei Bügeln 3 ausgebildet sein. Zwischen den vertikalen Zaunständern 30 des Zauns 32 sind horizontale Zaunelemente 34 angeschlossen.

Neben der erfindungsgemäßen Niveauausgleichsvorrichtung 1 weist der Zaunständer 30 im Prinzip lediglich eine vertikale Stange 36 auf, an der Anschlusselemente 38 zum Anschließen der horizontalen Zaunelemente 37 vorgesehen sind.

Ein Anschlusselement 38 ist in der Fig. 21 deutlicher gezeigt. Das in der Fig. 21 gezeigte Anschlusselement 38 ist drehbar an der Stange 36 angeordnet. Es ist zwischen zwei Stiften 40, 42 drehbar gelagert. Im Wesentlichen vertikal verlaufende Zapfen 44 erlauben das Einhängen von korrespondierenden Anschlusselementen 46, die an den horizontalen Zaunelementen 34 angeschlossen sind. Es ist auch möglich, mehr als zwei Zapfen 44. vorzusehen, die um die Stange 36 verteilt sind. Das gilt insbesondere dann, wenn das Anschlusselement 38 fest und nicht drehbar an der Stange 36 angeschlossen ist.

Ein horizontales Zaunelement 34 weist mindestens zwei Vertikalstreben 48 und mindestens zwei Horizontalstreben 50 auf. Die Vertikalstreben 48 und die Horizontalstreben 50 sind gelenkig aneinander angeschlossen, so dass das prinzipiell rechteckige horizontale Zaunelement 34 durch ein paralleles Verschieben der zwei Vertikalstreben 48 zueinander zu einem windschiefen Rechteck geschoben werden kann. Das erlaubt es, dass die horizontalen Zaunelemente 34 im Wesentlichen parallel zum Gelände verlaufen können. Man sieht in der Fig. 20 besonders schön, wie der Zaun 32 auch in geneigtem Gelände aufgestellt werden kann.

Besonders für den Zaun ist es sehr günstig, relativ leichte Materialien, beispielsweise Aluminium oder Aluminiumlegierungen zu verwenden. Das kann auch bei anderen Ausführungsformen, beispielsweise bei Bistrotischen, Leitern, etc. günstig sein. Bei Materialien, die weniger günstige Gleiteigenschaften aufeinander aufweisen, kann es günstig sein, den Bügel 3 und/oder die Führung 2 mit einem Kunststoffmaterial zu versehen, das günstige Gleiteigenschaften aufweist. Gegebenenfalls können Teile der Vorrichtung oder die gesamte Vorrichtung aus Kunststoffmaterial gefertigt werden.

Vorrichtung zum Höhen- und Neigungsausgleich, dadurch gekennzeichnet, dass ein bogenförmiger Bügel 3 verschiebbar in einem ebenfalls bogenförmigen Führungsrohr 2 angeordnet ist, wobei der Bügel 3 aus dem Führungsrohr 2 vorzugsweise beidseitig heraussteht.

Vorzugsweise steht mindestens eine gebogene Strebe 4 mit dem Führungsrohr 2 in Verbindung.

Vorzugsweise weist die Vorrichtung mindestens eine vorzugsweise ebene Auflagefläche 5 auf, die mit dem Führungsrohr 2 und/oder der Strebe 4 vorzugsweise starr in Verbindung steht. Die Auflagefläche 5 kann kreisrund oder rechteckig ausgebildet sein.

Vorzugsweise schließt die Ebene 9, in der das Führungsrohr 2 verläuft, mit dem Lot 8 auf die Auflagefläche 5 einen Winkel 12 zwischen 30° und 60°, insbesondere von etwa 45° ein.

Vorzugsweise sind mindestens zwei bogenförmige Bügel 3, 3' verschiebbar, in jeweils einem ebenfalls bogenförmigen Führungsrohr 2, 2' angeordnet, wobei die Bügel 3, 3' vorzugsweise beidseitig aus den jeweiligen Führungsrohren 2, 2' herausstehen und die jeweiligen Führungsrohre 2, 2' vorzugsweise an einer gemeinsamen Auflagefläche 5 befestigt sind. Zumindest die Ebenen 11, 11' zweier Führungsrohre 2, 2', in denen die jeweiligen Führungsrohre 2, 2' verlaufen, können miteinander einen Winkel 10 von vorzugsweise 70° bis 110°, vorzugsweise etwa 90° einschließen.

Vorzugsweise ist an der Vorrichtung 1 mindestens jeweils eine Feststellungsvorrichtung 13, 1' zum Feststellen der Bügel 3, 3' in den jeweiligen Führungsrohren 2, 2' angebracht.

Die Vorrichtung kann mit einem bewegbaren Gegenstand vorzugsweise starr in Verbindung stehen.

Der bewegbare Gegenstand kann eine Schubkarre 22 oder eine Leiter 23 oder ein Tischwagen 24 sein.

Vorzugsweise bildet die Ebene 9, in der das Führungsrohr 2 verläuft, mit der Ebene 25, in der die Leiter 23 verläuft, einen Winkel 28 zwischen 0° und 90°, insbesondere von etwa 25°.

Vorzugsweise ist der Bügel 3 unter dem Einfluss der Schwerkraft formschlüssig im Führungsrohr 2 festgestellt. Der Außerdurchmesser des Bügels 3 kann im Wesentlichen dem Innendurchmesser des Führungsrohrs 2 entsprechen.

An den aus dem Führungsrohr 2 herausstehenden Bereichen des Bügels 3 kann jeweils eine Schraubenfeder 19 angeordnet sein.

Vorzugsweise ist an der Vorrichtung 1 mindestens eine Feststellvorrichtung 13 zum Feststellen des Bügels 3 im Führungsrohr 2 angebracht.

An Stelle eines bogenförmigen Führungsrohrs 2 können voneinander beabstandete bogenförmige Rohrabschnitte oder Ringe 21 vorgesehen sein.

## Patentansprüche

1. Vorrichtung (1) zum Neigungsausgleich, aufweisend einen bogenförmigen Bügel (3), der verschiebbar in einer Führung (2; 21) angeordnet ist, wobei der Bügel (3) mindestens an einem Ende aus der Führung (2; 21) heraussteht und dieses mindestens eine Bügelende ein Standbein für die Vorrichtung bildet, und wobei mindestens ein weiteres Abstützelement (4; 2',3') vorgesehen ist,
**dadurch gekennzeichnet, dass** die Führung eine starre Führung (2, 21) ist, dass der Bügel (3) mit einem Winkel an der Vorrichtung (1) augeschlossen ist, und dass der Bügel (3) im Einsatz derart mit einem Winkel relativ zur Lotrechten angeordnet ist, dass er unter dem Einfluss der Schwerkraft in der Führung (2, 21) komftschlussig festgestellt ist.

2. Vorrichtung (1) nach Anspruch 1, **dadurch gekennzeichnet, dass** der Winkel zu der Lotrechten zwischen 30° und 60°, insbesondere etwa 45° beträgt.

3. Vorrichtung (1) nach Anspruch 1 oder 2, **dadurch gekennzeichnet, dass** eine elastisch nachgiebige Rückstellvorrichtung (19) derart angeordnet ist, dass sie den bogenförmigen Bügel (3) betriebsmäßig im unbelasteten Zustand in seine Ausgangsposition zurückstellen kann.

4. Vorrichtung (1) nach Anspruch 3, **dadurch gekennzeichnet, dass** die Rückstellvorrichtung zwei Schraubenfedern (19) aufweist, die jeweils an einem der aus der Führung (2;21) herausstehenden Bereichen des Bügels (3) angebracht sind.

5. Vorrichtung (1) nach einem der Ansprüche 1 bis 4, **dadurch gekennzeichnet, dass** der Außendurchmesser des Bügels (3) im Wesentlichen dem Innendurchmesser der Führung (2;21) entspricht.

6. Vorrichtung (1) nach einem der Ansprüche 1 bis 5, **dadurch gekennzeichnet, dass** die Führung ein bogenförmiges Führungsrohr (2) ist.

7. Vorrichtung (1) nach einem der Ansprüche 1 bis 6, **dadurch gekennzeichnet, dass** die Führung aus voneinander beabstandeten bogenförmigen Rohrabschnitten oder Ringen (21) gebildet ist.

8. Vorrichtung (1) nach einem der Ansprüche 1 bis 7, **dadurch gekennzeichnet, dass** sie eine Auflagefläche (5) aufweist.

9. Vorrichtung (1) nach Anspruch 8, **dadurch gekennzeichnet, dass** die Auflagefläche (5) an der Führung (2; 21) und/oder dem weiteren Abstützelement (4; 2',3') starr angeschlossen ist.

10. Vorrichtung (1) nach einem der Ansprüche 1 bis 9, **dadurch gekennzeichnet, dass** die Führung (2; 21) bzw. der Bügel (3) eine Ebene (9) aufspannt, und dass die Ebene (9) mit dem Lot (8) auf die Auflagefläche (5) einen Winkel (12) einschließt, der vorzugsweise zwischen 30° und 60° und insbesondere etwa 45° beträgt.

11. Vorrichtung (1) nach einem der Ansprüche 1 bis 10, **dadurch gekennzeichnet, dass** das weitere Abstützelement eine Strebe (4) ist.

12. Vorrichtung (1) nach einem der Ansprüche 1 bis 11, **dadurch gekennzeichnet, dass** das weitere Abstützelement ein bogenförmiger Bügel (3') ist, der in einer Führung (2'; 21) verschiebbar angeordnet ist.

13. Vorrichtung (1) nach Anspruch 12, **dadurch gekennzeichnet, dass** die Ebenen (11;11') zweier Führungen (2;2'), in denen die jeweiligen Führungen (2;2') verlaufen, miteinander einen Winkel (10) einschließen, der vorzugsweise 70° bis 110° und insbesondere etwa 90° beträgt.

14. Leiter (23) aufweisend eine Vorrichtung (1) gemäß einem der Ansprüche 1 bis 7, wobei das weitere Abstützelement das obere freie Ende der Leiter (23) ist.

15. Leiter (23) nach Anspruch 14, **dadurch gekennzeichnet, dass** die Ebene (9), die von der Führung (2;21) aufgespannt wird, mit der Ebene, in der die Leiter (23) verläuft, einen Winkel bildet, der vorzugsweise zwischen 0° und 90° und insbesondere etwa 25° beträgt.

16. Straßenverkehrszeichen (18) aufweisend eine Vorrichtung (1) gemäß einem der Ansprüche 1 bis 13.

17. Schubkarre (22) aufweisend eine Vorrichtung (1) gemäß einem der Ansprüche 1 bis 7, wobei das Rad der Schubkarre (22) das weitere Abstützelement bildet.

18. Motorrad aufweisend eine Vorrichtung (1) gemäß einem der Ansprüche 1 bis 7, wobei der Bügel (3) als drehbarer Hauptständer an dem Motorrad angeschlossen ist und das Vorderrad oder das Hinterrad des Motorrads im Einsatz der Vorrichtung das weitere Abstützelement bildet.

19. Tisch (24) aufweisend eine Vorrichtung (1) gemäß einem der Ansprüche 1 bis 13.

20. Zaun (32) aufweisend vertikale Zaunständer (30) und daran angeschlossene horizontale Zaunelemente (34), wobei mindestens einer der Zaunständer (30) eine Vorrichtung (1) gemäß einem der Ansprüche 1 bis 13 aufweist.

21. Zaun (32) nach Anspruch 20, **dadurch gekennzeichnet, dass** der Zaunständer (30) im Wesentlichen eine Stange (36) ist, die an ihrem unteren Ende den bogenförmigen Bügel (3) und eine Strebe (4) aufweist.

22. Zaun (32) nach Anspruch 20 oder 21, **dadurch gekennzeichnet, dass** an dem Zaunständer (30) Anschlusselemente (38) zum Einhängen der horizontalen Zaunelemente (34) vorgesehen sind und korrespondierende Anschlusselemente (46) an den horizontalen Zaunelementen (34) vorgesehen sind.

23. Zaun (32) nach einem der Ansprüche 20 bis 22, **dadurch gekennzeichnet**,
**dadurch gekennzeichnet, dass** ein horizontales Zaunelement (34) aus mindestens zwei Vertikalstreben (48) und mindestens zwei Horizontalstreben (50) gebildet ist, die derart gelenkig aneinander angeschlossen sind, dass die Vertikalstreben in der Ebene des horizontalen Zaunelements (34) relativ zueinander parallelverschieblich sind.

## Claims

1. A device (1) for gradient compensation, comprising an arc-shaped bow (3) slidably arranged in a guide means (2; 21 the bow (3) protruding at least on one end from the guide means (2; 21) and this at least one bow end constituting a standing leg for the device, there being provided at least one additional supporting member (4; 2', 3'),
**characterized in that** the guide means is a rigid guide means (2; 21), that the bow (3) is joined to the device at an angle, and that the bow (3), in use, is arranged at an angle with respect to the perpendicular such that it is frictionally fixed in the guide means (2; 21) under the influence of gravity.

2. A device (1) according to claim 1,
**characterized in that** the angle with respect to the perpendicular is between 30° and 60°, in particular approx. 45°.

3. A device (1) according to claim 1 or 2,
**characterized in that** a resilient resetting means (19) is disposed such that it is capable of operationally resetting the arc-shaped bow (3) in the unloaded state to the initial position thereof.

4. A device (1) according to claim 3,
**characterized in that** the resetting means comprises two coil springs (19) each attached on one of the portions of the bow (3) protruding from the guide means (2; 21).

5. A device (1) according to any of claims 1 to 4,
**characterized in that** the outer diameter of the bow (3) substantially corresponds to the inner diameter of the guide means (2; 21).

6. A device (1) according to any of claims 1 to 5,
**characterized in that** the guide means is an arc-shaped guide tube (2).

7. A device (1) according to any of claims 1 to 6,
**characterized in that** the guide means is formed of mutually spaced apart arc-shaped tube sections or rings (21).

8. A device (1) according to any of claims 1 to 7,
**characterized in that** it comprises a supporting surface (5).

9. A device (1) according to claim 8,
**characterized in that** the supporting surface (5) is rigidly joined to the guide means (2; 21) and/or the additional supporting member (4; 2', 3').

10. A device (1) according to any of claims 1 to 9,
**characterized in that** the guide means (2; 21) and the bow (3) extend in a plane (9) and **in that** the plane (9) includes an angle (12) with the perpendicular (8) to the supporting surface (5) which is preferably between 30° and 60° and in particular approx. 45°.

11. A device (1) according to any of claims 1 to 10,
**characterized in that** the additional supporting member is a strut (4).

12. A device (1) according to any of claims 1 to 11,
**characterized in that** the additional supporting member is an arc-shaped bow (3') slidably disposed in a guide means (2; 21).

13. A device (1) according to claim 12,
**characterized in that** the respective planes (11; 11') of extension of two guide means (2; 2') include an angle (10) with each other which is preferably from 70° to 110° and in particular approx. 90°.

14. A ladder (23) comprising a device (1) according to any of claims 1 to 7,
wherein the additional supporting member is the upper free end of the ladder (23).

15. A ladder (23) according to claim 14,
**characterized in that** the plane (9) of extension of the guide means (2; 21) includes an angle with the plane in which the ladder (23) extends which is preferably between 0° and 90° and in particular approx. 25°.

16. A road traffic sign (18) comprising a device (1) according to any of claims 1 to 13.

17. A wheelbarrow (22) comprising a device (1) according to any of claims 1 to 7, wherein the wheel of the wheelbarrow (22) constitutes the additional supporting member.

18. A motorcycle comprising a device (1) according to any of claims 1 to 7,
wherein the bow (3) is joined to the motorcycle as rotatable main stand and the front wheel or the rear wheel of the motorcycle constitutes the additional supporting member in use of the device.

19. A table (24) comprising a device (1) according to any of claims 1 to 13.

20. A fence (32) comprising vertical fence posts (30) and horizontal fence members (34) connected thereto, wherein at least one of the fence posts (3) comprises a device (1) according to any of claims 1 to 13.

21. A fence (32) according to claim 20,
**characterized in that** the fence post (30) is substantially a rod (36) having at the lower end thereof the arc-shaped bow (3) and a strut (4).

22. A fence (32) according to claim 20 or 21,
**characterized in that** the fence post (30) is provided with connecting members (38) for hooking the horizontal fence members (34), and the horizontal fence members (34) are provided with corresponding connecting members (46).

23. A fence (32) according to any of claims 20 to 22,
**characterized in that** a horizontal fence member (34) is formed of at least two vertical struts (48) and at least two horizontal struts (50) that are connected to each other in articulated fashion such that the vertical struts are adapted to be displaced parallel to each other in the plane of the horizontal fence member (34).

## Revendications

1. Dispositif (1) pour la compensation d'une inclinaison, présentant un arceau en forme d'arc (3) qui est disposé dans une pièce de guidage (2, 21), l'arceau (3) dépassant, à une extrémité, de la au moins une pièce de guidage (2, 21) et cette au moins une extrémité de l'arceau constituant un pied d'appui pour le dispositif et au moins un autre élément d'appui (4 ; 2', 3') étant prévu, **caractérisé en ce que** la pièce de guidage est une pièce de guidage rigide (2, 21), que l'arceau est relié au dispositif (1) par une équerre et **en ce que** l'arceau (3) est disposé, avant sa mise en oeuvre, avec une équerre, par rapport à la verticale de telle manière que sous l'effet de la pesanteur il soit fixé à force dans la pièce de guidage (2, 21).

2. Dispositif (1) selon la revendication 1, **caractérisé en ce que** l'équerre présente par rapport à la verticale un angle situé entre 30° et 60°, particulièrement environ 45°.

3. Dispositif (1) selon la revendication 1 ou 2, **caractérisé en ce qu'**un dispositif de rappel (19) cédant élastiquement est disposé de telle façon qu'il peut rappeler l'arceau en forme d'arc (3), à l'état non chargé du point de vu de son fonctionnement, dans sa position de départ.

4. Dispositif (1) selon la revendication 3, **caractérisé en ce que** le dispositif de rappel présente deux ressorts à boudin (19) qui sont montés chacun sur l'une des zones de l'arceau (3) dépassant de la pièce de guidage (2, 21).

5. Dispositif (1) selon l'une des revendications 1 à 4, **caractérisé en ce que** le diamètre extérieur de l'arceau (3) correspond essentiellement au diamètre intérieur de la pièce de guidage (2, 21).

6. Dispositif (1) selon l'une des revendications 1 à 5, **caractérisé en ce que** la pièce de guidage (2, 21) est un tube de guidage (2) cintré.

7. Dispositif (1) selon l'une des revendications 1 à 6, **caractérisé en ce que** la pièce de guidage (2, 21) est formée par des sections de tube ou d'anneaux (21) cintres espacés les uns des autres.

8. Dispositif (1) selon l'une des revendications 1 à 7, **caractérisé en ce qu'**il présente une surface d'appui (5).

9. Dispositif (1) selon la revendication 8, **caractérisé en ce que** la surface d'appui (5) est rigidement reliée à la pièce de guidage (2, 21) et/ou à l'autre élément d'appui (4 ; 2', 3').

10. Dispositif (1) selon l'une des revendications 1 à 9, **caractérisé en ce que** la pièce de guidage (2, 21) ou l'arceau (3) s'étend dans un plan (9) et **en ce que** le plan (9) définit avec la verticale (8), sur la surface d'appui, un angle (12) qui est compris de préférence entre 30° et 60° et notamment environ 45°.

11. Dispositif (1) selon l'une des revendications 1 à 10, **caractérisé en ce que** l'autre élément d'appui est une entretoise (4).

12. Dispositif (1) selon l'une des revendications 1 à 11, **caractérisé en ce que** l'autre élément d'appui est un arceau en forme d'arc (3') disposé coulissant dans une pièce de guidage (2' ; 21).

13. Dispositif (1) selon la revendication 12, **caractérisé en ce que** les plans (11 ; 11') de deux pièces de guidage (2 ; 2'), dans lesquels chacune des pièce de guidage (2, 2') s'étend, comprennent entre eux un angle (10) faisant de préférence 70° à 110° et notamment 90°.

14. Echelle, présentant un dispositif (1) selon l'une des revendications 1 à 7, dans laquelle l'autre élément d'appui constitue l'extrémité supérieure libre de l'échelle (23).

15. Echelle selon la revendication 14, **caractérisée en ce que** le plan (9) défini par la pièce de guidage (2, 21) forme, avec le plan dans lequel s'étend l'échelle (23), un angle faisant de préférence entre 0° à 90° et notamment 25°.

16. Panneau de signalisation routière (18) comportant un dispositif (1) selon l'une des revendications 1 à 13.

17. Brouette (22) comportant un dispositif (1) selon l'une des revendications 1 à 7, dans laquelle la roue de la brouette (22) constitue l'autre élément d'appui.

18. Motocyclette comportant un dispositif (1) selon l'une des revendications 1 à 7, dans laquelle l'arceau (3) est monté sur la motocyclette en tant que béquille principale pivotante et la roue avant ou la roue arrière de la motocyclette forme l'autre élément d'appui lorsque le dispositif est actif.

19. Table (24) comportant un dispositif (1) selon l'une des revendications 1 à 13.

20. Cloture (32) comprenant des poteaux verticaux (30) ainsi que des éléments de cloture horizontaux reliés à eux, dans laquelle au moins un des poteaux verticaux (30) comporte un dispositif (1) selon l'une des revendications 1 à 13.

21. Cloture (32) selon la revendication 20, **caractérisée en ce que** le poteau (30) est essentiellement une barre (36) qui présente l'arceau (3) et une entretoise (4) à son extrémité inférieure.

22. Cloture (32) selon la revendication 20 ou 21, **caractérisée en ce que** des éléments de raccordement (38) sont prévus sur le poteau (30) pour suspendre les éléments de cloture horizontaux (34) et que des éléments de raccordement (46) correspondant sont prévus sur les éléments de cloture horizontaux (34).

23. Cloture (32) selon la revendication 20 ou 22, **caractérisée en ce qu'**un élément de cloture horizontal (34) est constitué d'au moins deux entretoises verticales (48) et au moins deux entretoises horizontales (50) qui sont reliés avec articulation entre eux de telle manière que les entretoises verticales puissent coulisser parallèlement entre elles dans le plan de l'élément de cloture horizontal (34).
